Europäisches Patentamt

European Patent Office

Office européen des brevets

(11) Publication number: **0 518 538 A2**

# EUROPEAN PATENT APPLICATION

(21) Application number: **92304995.1**

(22) Date of filing: **01.06.92**

(51) Int. Cl.⁵: **H02P 5/17**

(30) Priority: **12.06.91 GB 9112618**

(43) Date of publication of application:
**16.12.92 Bulletin 92/51**

(84) Designated Contracting States:
**DE FR SE**

(71) Applicant: **RACAL HEALTH & SAFETY LIMITED**
**Western Road**
**Bracknell, Berkshire RG12 1RG(GB)**

(72) Inventor: **Rabin, Paul Robert**
**11 East Court, Wembley**
**Middlesex HA0 3OJ(GB)**

(74) Representative: **Obee, Robert William**
**Group Patents Department Racal Group**
**Services Limited Richmond Court 309 Fleet**
**Road**
**Fleet Hampshire GU13 8BU(GB)**

(54) **Motor control system.**

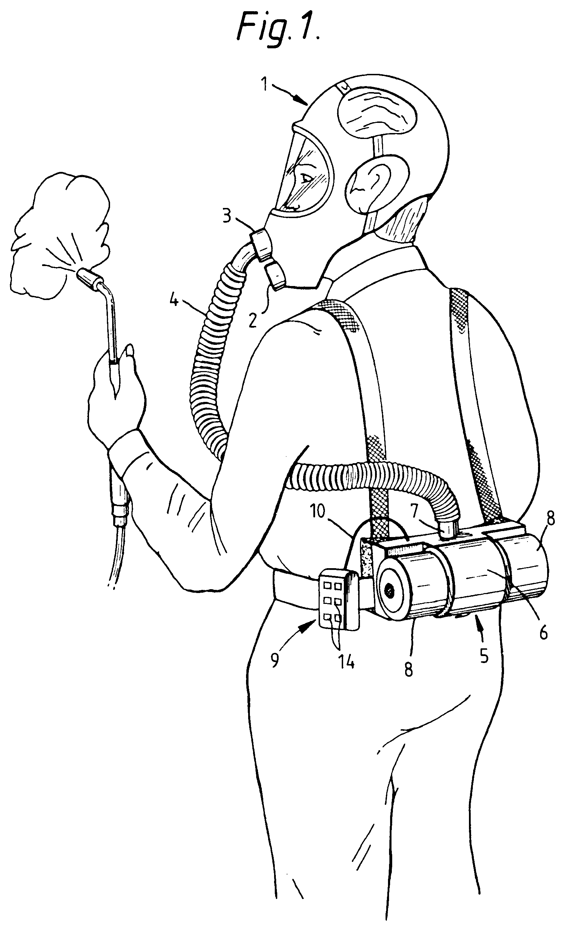

(57) A control system for an electric motor (11) driving a fluid moving device, such as the air fan in a powered respirator (Fig 1), senses the speed of the motor by the back EMF which it produces ($V_{EMF}$) and senses the running current of the motor by the voltage drop ($V_R$) across a fixed series resistor (R). From these parameters the prevailing rate of flow from the fan can be calculated in a microprocessor (12) and compared to a specified value. The resultant error signal is used to modulate the widths of power pulses supplied (16) to the motor such that the fan is controlled to produce a substantially constant rate of flow notwithstanding variations of flow resistance caused e.g. by progressive blockage of associated filters.

Fig.4.

The present invention relates the control of electric motors used for driving fans, impellers or other such fluid movers. More particularly the invention is concerned with a control system for providing a constant flow of fluid under variable load conditions. In principle, the system of the present invention may find utility in the control of any form of electric motors (e.g. DC motors, AC motors, stepper motors) driving any form of fluid moving device (e.g. axial, centrifugal, tangential and radial impellers for gases or liquids) for use in a variety of different applications. The field of use with which we are principally concerned and the context in which the invention will be explained herein, however, is the control of a DC electric motor driving an air fan in a powered respirator, that is to say a personal respiratory protection apparatus of the kind in which a battery-powered fan draws or impells a forced flow of air from the surrounding atmosphere through one or more filters to remove dust or other contaminants before delivering the same to the interior of a visor, mask or other facepiece for respiration by the user.

Most powered respirators are designed to operate in a "constant flow" mode in which the motor runs continuously to supply filtered air to the user at a rate sufficient to meet the maximum expected breathing demand under possibly strenuous conditions of work - typically 120 litres/minute or more. In practice, however, the flow rate of air supplied is not usually constant but tends to decrease over time as the filter(s) become blocked with contaminants and their flow resistance consequently increases and as the battery powering the fan motor begins to exhaust. Accordingly, it is normally the case that such respirators are designed to supply considerably in excess of their "rated" flow when fitted with clean filter(s) and a fresh battery, to ensure that an adequate flow rate is still maintained at the end of the intended period of operation when the effects of filter blockage and/or battery exhaustion may have become significant. This practice of oversupply is in itself wasteful, however, and means that the filter(s) and/or battery will become blocked/exhausted sooner than if the motor could be controlled to supply only the "rated" flow of air throughout its period of use. It is also recognised that variations in flow resistance occur in practice for the same respirator type when worn by different users, due to variations in the fit of the facepiece.

In United Kingdom patent specification no. 2195037 an attempt is made to control a powered respirator motor to provide constant flow irrespective of filter blockage or battery exhaustion, by maintaining a constant motor current. The correlation between motor current and flow rate under changing loads is only approximate, however, so this technique is useful only over a narrow range of operating conditions. On the other hand, the present invention is predicated upon the discovery that for a given electric motor/impeller system operating at a specified constant flow rate under varying load conditions there is a unique relationship between the speed of the motor and its running current. Consequently, by monitoring these parameters it is possible to control the power supplied to the motor to provide a constant rate of flow notwithstanding changes in the load conditions.

Accordingly in one aspect the present invention resides in a control system for an electric motor driving a fluid moving device, comprising: means for sensing the speed of the motor; means for sensing the running current of the motor; and means responsive to said sensing means for controlling the power supplied to the motor whereby to maintain a substantially constant rate of flow from the fluid moving device notwithstanding variations of resistance to such flow over a range. In such a system constant flow can be maintained without the need for a separate flow transducer, the necessary data for exercise of control over the motor being derived from the two aforementioned parameters.

Most preferably, a measure of the speed of the motor is derived by sensing the back EMF which it produces, this being proportional to the speed; for this purpose the power supply to the motor will be briefly interrupted at intervals to permit the back EMF to be sensed. In this way, the need for a speed transducer separate from the motor structure can be avoided. Deriving a measure of the running current may be achieved by, for example, sensing the voltage drop across a fixed series resistance. The derivation of the necessary control inputs is therefore extremely simple and facilitates low cost implementation of the system.

It is also preferred to supply the power to the motor in the form of voltage pulses, the widths of which are modulated to achieve the desired power control and consequent constant flow rate. In such an arrangement the aforesaid references to running current and power will be to their average values per unit time. In this arrangement motor speed may be derived by sensing back EMF during the intervals between successive pulses if sufficient time is available, or else the whole pulse train may be interrupted for this purpose for longer intervals. However, a pulse width modulation regime is not an essential feature of the invention. In an alternative the power supply is again interrupted at invervals to sense back EMF but with the voltage being supplied to the motor at a regulated constant level in between.

The invention will now be more particularly described, by way of example, with reference to the accompanying drawings, in which:-

Figure 1 illustrates one form of powered respirator to which the invention may be applied;

Figure 2 represents a typical relationship between motor speed and running current in a powered respirator;

Figure 3 represents a typical relationship between motor speed and supplied power in a powered respirator; and

Figure 4 is a schematic block diagram of a control system according to the invention for a powered respirator.

Referring to Figure 1, this shows one form of powered respirator to which the invention may be applied. It includes a facepiece 1 which in the illustrated embodiment comprises a full face mask covering the eyes, nose and mouth of the wearer and which will be peripherally sealed to his face. The facepiece is provided with an outlet fitted with a one-way exhale valve 2 and an inlet 3 to which is connected a flexible air hose 4 leading from a pump unit 5. The pump unit 5 is in the illustrated embodiment supported by a harness on the back of the user, and comprises a housing 6 within which is located a DC electric motor driving a centrifugal fan. The illustrated unit has an outlet 7 from the fan to which the hose 4 is connected, and a pair of inlets to the fan to each of which is fitted a replaceable filter canister 8 selected to remove specified particulate or vapour contaminants from the ambient air which is drawn in through the filters by the fan and then delivered through the hose 4 to the facepiece 1. Power for the fan motor in housing 6 is supplied from a rechargeable battery in a separate pack 9 which also houses the control unit for the motor which will be more particularly described hereinafter. A cable 10 connecting the pack 9 and the pump unit 5 carries power from the battery to the motor and input signals (as will be described hereinafter) from the motor to the control unit.

It is emphasised that Figure 1 depicts but one example of a powered respirator to which the invention may be applied. Many variants of this kind of device are known, employing facepieces in the form of visors, masks, helmets, hoods and the like and with the pump unit location and choice of fan and filter types open to considerable variation. The common features of such devices, however, are a facepiece to be worn by the user and an electrically motorised fan which draws or impells a forced flow of ambient air through one or more filters to remove selected contaminants from the air before delivering the same to the facepiece. Similar devices may also be provided without filters, e.g. where a cooling flow to the face is required from a clean ambient atmosphere.

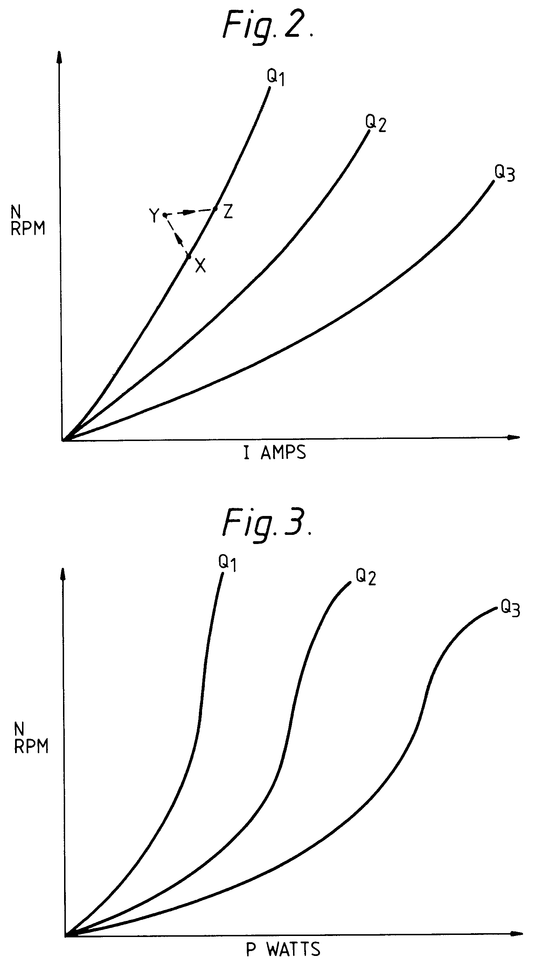

For apparatus of this kind it can be shown that there are unique relationships between the airflow, motor/fan speed, motor running current and supplied power, as exemplified graphically by Figures 2 and 3. In this respect Figure 2 shows a typical set of curves of motor/fan speed (N) vs. running current (I) for an increasing series of constant airflows ($Q_1$, $Q_2$, $Q_3$) applicable over a range of flow resistances while Figure 3 shows a typical set of curves of motor/fan speed (N) vs. supplied power (P) for the same increasing series of constant airflows ($Q_1$, $Q_2$, $Q_3$) over the same range of flow resistances. It follows that, for a given respirator in which these relationships can be expressed mathematically, a program can be devised by which, through monitoring the values of N and I, P can be controlled to provide a constant Q notwithstanding changes in the encountered flow resistance. More particularly, it has been found that for constant airflow:-

$$Q = f (\log IN, \log N)$$

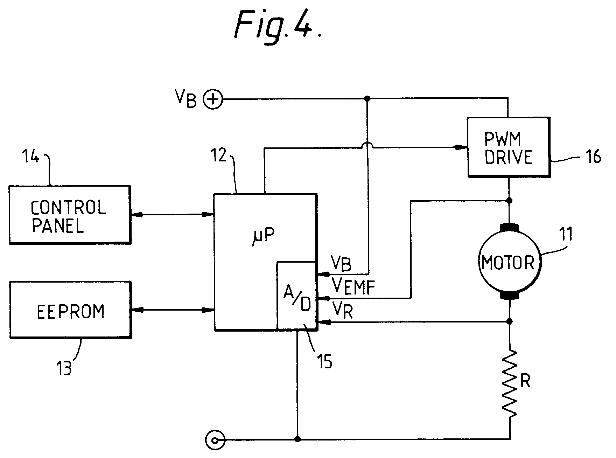

which we shall term the "constant airflow algorithm", the precise form of the function involving constants determined by the particular respirator concerned. A control system for the respirator of Figure 1 in which this algorithm is used to provide a substantially constant "rated" airflow notwithstanding changes in flow resistance in the course of operation (due e.g. to progressive filter blockage) will now be described with reference to Figure 4.

Figure 4 denotes at 11 the motor/fan of the pump unit 5 and at 12 a control microprocessor programmed with the constant flow algorithm which is located with the battery in pack 9. An EEPROM 13 associated with the microprocessor holds the system constants which have been found experimentally for the respirator type in question and which are loaded into the algorithm on start up. The microprocessor may be programmed to provide a single set airflow, or this may be selectable from a series of set airflows or infinitely selectable over a range, in which case an associated control panel 14 is used to instruct the microprocessor of the flow required. The microprocessor has an analogue to digital converter section 15 with inputs for (i) the battery voltage ($V_B$);(ii) the back EMF ($V_{EMF}$) produced by the motor, which is proportional to its speed; and (iii) the voltage drop ($V_R$) across a fixed resistor R in series with the motor, which is proportional to the motor's running current. Power to the motor is provided throught a pulse width modulation drive 16 under the control of the microprocessor which can alter the length of the pulses to increase or decrease the power supplied per unit time to thereby increase or decrease the airflow accordingly.

In a practical example, the PWM drive 16 supplies voltage pulses to the motor 11 at 35KHz. Every 100 Hz the pulses are interrupted for a period of 2ms during which $V_{EMF}$ issensed as a measure of the motor/fan speed N. Meanwhile $V_R$ is constantly monitored and averaged over a plurality of pulses as a measure of running current I. The sensed values are used in the constant airflow algorithm to calculate the prevailing airflow Q and this is compared with the value of airflow which has been set. Any difference generates a corresponding error signal which is applied to the PWM drive to correspondingly lengthen or shorten the supplied pulses in accordance with the sign of the error signal. This process repeats at predetermined intervals with the pulse width being progressively adjusted until the error signal is zero. Calculations of Q from the sensed $V_{EMF}$ and $V_R$ continue to repeat throughout operation of the respirator and further adjustment of the pulse width takes place whenever the calculated airflow departs from the set value.

An example of the response of this control system to an increasing flow resistance caused by filter blockage in the respirator of Figure 1 is indicated graphically (in somewhat exaggerated form) in Figure 2. Assume that the system is running at constant airflow $Q_1$ at point X on the corresponding N vs. I curve. An increased resistance as the filters block will reduce the flow. As less air is being moved the work done by the motor decreases and so its speed N increases while the running current I decreases. The system therefore departs from the $Q_1$ curve to a point such as Y in Figure 2. The corresponding error signal generated by the microprocessor when this change in N and I is sensed causes the pulse width to the motor to increase and thereby returns the system to the $Q_1$ curve at a point such as Z in Figure 2. The net result is an increase in both N and I from the point where the departure from $Q_1$ occurred.

This same control system will automatically compensate for falling battery voltage since this will also lead to a decrease in the calculated Q derived from sensing N and I and the system will similarly respond by lengthening the pulse width to restore the set airflow.

In the event that the calculated airflow at any time should fall below a minimum threshold an alarm signal can be provided to alert the user, e.g. by means of an LED or electronic sounder on the control panel 14. An alarm signal may also be given if the battery voltage $V_B$ as sensed by the microprocessor falls below a minimum threshold. It may also be desirable to provide an alarm signal in the event that the pulse width from driver 15 reaches a maximum value, indicating that no further compensation for falling flow can be achieved.

An additional or alternative alarm signal indicative of filter blockage can be derived from a function of the sensed $N^2$.

**Claims**

1. A control system for an electric motor (11) driving a fluid moving device, characterised by: means for sensing ($V_{EMF}$) the speed of the motor (N); means for sensing ($V_R$) the running current of the motor (I); and means responsive (12) to said sensing means for controlling (16) the power (P) supplied to the motor whereby to maintain a substantially constant rate of flow (Q) from the fluid moving device notwithstanding variations of resistance to such flow over a range.

2. A control system according to claim 1 wherein said speed sensing means comprise means for sensing the back EMF ($V_{EMF}$) produced by the motor (11), during intervals when the power supply to the motor is interrupted.

3. A control system according to claim 1 or claim 2 wherein said current sensing means comprise means for sensing the voltage drop ($V_R$) across a fixed resistance (R) in series with the motor (11).

4. A control system according to any preceding claim comprising means (16) for supplying power to the motor in the form of voltage pulses and for modulating the widths of said pulses in response to said sensing means whereby to maintain said substantially constant rate of flow (Q).

5. A control system according to any preceding claim wherein said control means (12) are arranged repeatedly to calculate the prevailing rate of flow (Q) from the sensed said speed (N) and current (I), compare said calculated rate with a specified constant rate, generate a corresponding error signal and vary the power (P) supplied to the motor in accordance with said error signal.

6. A control system according to any preceding claim wherein said control means (12) are arranged to calculate the prevailing rate of flow (Q) as a function of log IN and log N where I represents the sensed said current and N represents the sensed said speed.

7. A control system according to any preceding claim comprising means for providing an alarm signal in the event that the prevailing rate of flow (Q) as calculated from the sensed said speed (N) and current (I) falls below a specified threshold.

8. A control system according to claim 4 or any other claim appended thereto comprising means for providing an alarm signal in the event that the widths of said pulses (16) exceed a specified threshold.

9. A control system according to any preceding claim comprising means for providing an alarm signal in the event that the resistance to flow as calculated as a function of the square of the sensed said speed (N) exceeds a specified threshold.

10. A powered respirator comprising: a facepiece (1); a DC electric motor (11); and a fan (5) driven by said motor to create a forced flow of air from the surrounding atmosphere to said facepiece (1); and further comprising a control system (9) for said motor according to any preceding claim whereby to maintain a substantially constant rate of flow (Q) from said fan.

# Fig.1.

Fig.2.

Fig.3.

# Fig.4.